# EUROPEAN PATENT APPLICATION

(11) **EP 4 129 606 A1**
(43) Date of publication of application: **08.02.2023**
(21) Application number: 20920525.1
(22) Date of filing: 15.10.2020
(51) Int. Cl.: B29B 17/04, B29B 17/02, B02C 19/18, B29C 44/00

(54) **INSOLE SCRAP RECYCLING METHOD, FOAM FOR SHOES, AND PULVERIZED INSOLE SCRAPS**

(30) Priority: 30.03.2020 KR 20200038022
(71) Applicant: Young Chang Eco Co., Ltd., Sasang-gu, Busan 47030 (KR)
(72) Inventor: CHO, Jae Young, Busan 47030 (KR)
(74) Representative: Hoefer & Partner Patentanwälte mbB
(86) International application number: PCT/KR2020/014052
(87) International publication number: WO 2021/167199

(57) **Abstract**

A method of recycling a large amount of insole scrap stack is proposed. The method includes forming a plate-shaped stack made of flat-plate-shaped foam and woven fabric, separating an insole scrap stack from the plate-shaped stack, and forming a pulverized insole scrap having an average diameter of 0.05 to 0.7mm by cool-pulverizing or freeze-pulverizing the insole scrap stack at 10°C or less. The pulverized insole scrap may be used for manufacturing foam.

## Description

### Technical Field

The present disclosure relates to a method of recycling an insole scrap produced inevitably as a by-product in an insole manufacturing process, a pulverized insole scrap for recycling, and foam for a shoe manufactured thereby.

### Background Art

Shoes worn to protect the feet are manufactured and marketed in various shapes and types. The shoes usually include an upper that covers and protects the top of the foot and the ankle, and a shoe sole that protects the sole of the foot, increases a frictional force with the ground to improve walkability, and absorbs shocks applied to the sole of the foot during walking.

Furthermore, such a shoe sole usually includes an insole (hereinafter also referred to as a "shoe insert"), a midsole that is made of rubber having an excellent shock absorbing force, foamed resin or sponge material to elastically disperse and support the load of a human body during walking, and an outsole that is attached to a bottom surface of the midsole and is made of a rubber material to impart a frictional force during walking.

Meanwhile, the insole is manufactured by attaching foam, made by foam-molding various materials such as polyurethane (PU) or ethylene-vinyl acetate (EVA), to woven fabric via an adhesive or a hot-melt film.

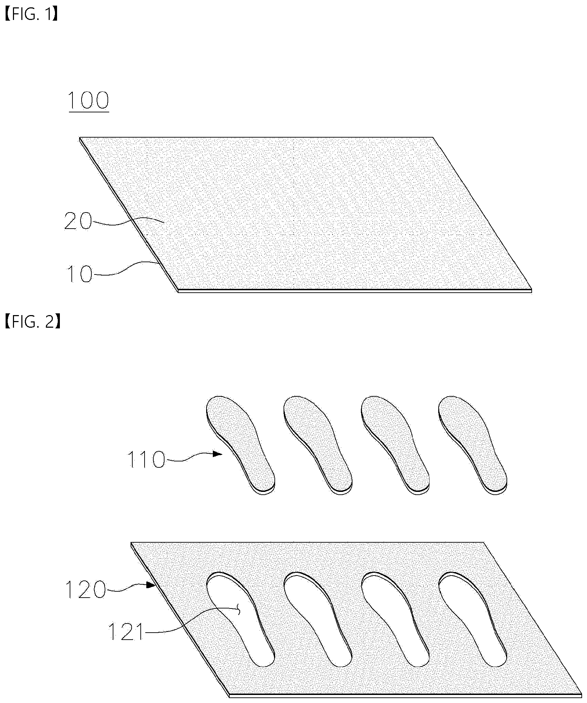

A process of manufacturing the insole is as follows: as shown in FIG. 1, woven fabric 20 is disposed in layers on an upper surface of approximately rectangular flat-plate-shaped foam 10, thus forming a plate-shaped stack 100.

Subsequently, a sole-shaped insole stack 110 is separated from the plate-shaped stack 100 by cutting.

If the insole stack 110 is separated from the plate-shaped stack 100, an insole scrap stack 120 having a sole-shaped opening 121 (a portion where the insole stack 110 was present) is left.

A large amount of insole scrap stack 120 is produced in the insole manufacturing process.

However, since the insole scrap stack 120 is configured by combining the foam and the woven fabric, it is considered that it is impossible to recycle the insole scrap stack.

The reason is because it is considered that it is substantially impossible to separate the insole scrap stack 120 into the foam and the woven fabric, and it is impossible to recycle the insole scrap stack for new purposes due to fluff of the woven fabric produced during pulverizing even if the insole scrap stack 120 is pulverized.

Therefore, although a large amount of insole scrap stack 120 is produced, it is simply discarded, thus possibly causing the destruction of natural environment.

### Disclosure

### Technical Problem

The present disclosure has been made to solve the above-mentioned problems and difficulties and relates to a method of recycling a large amount of insole scrap stack to be used for manufacturing foam for a shoe.

### Technical Solution

In order to accomplish the above objective, the present disclosure provides a method of recycling an insole scrap, the method including forming a plate-shaped stack by disposing woven fabric on an upper surface of flat-plate-shaped foam in layers; separating the plate-shaped stack into a sole-shaped insole stack and an insole scrap stack from which the insole stack is removed; and forming a pulverized insole scrap having an average diameter of 0.05 to 0.7mm by cool-pulverizing or freeze-pulverizing the insole scrap stack at 10°C or less, wherein the pulverized insole scrap may be used for manufacturing foam.

The method may further include, after the forming of the pulverized insole scrap, forming a foaming mixture in which foamable resins, foaming additives, and the pulverized insole scrap are mixed with each other; and forming a foam product by foaming the foaming mixture.

At the forming of the foaming mixture, 20 to 60 parts by weight of the pulverized insole scrap may be mixed with 100 parts by weight of the foamable resins.

The foam product obtained at the forming of the foam product may be foam for a shoe in a form of a flat plate.

The present disclosure provides foam for a shoe manufactured by the method of recycling the insole scrap.

The foam for the shoe may include foam for an insole, foam for a midsole, and foam for an outsole.

The present disclosure provides a pulverized insole scrap for manufacturing foam, wherein the pulverized insole scrap may have an average diameter of 0.05 to 0.7mm by cool-pulverizing or freeze-pulverizing an insole scrap stack at 10°C or less, the insole scrap stack being obtained by disposing woven fabric on an upper surface of flat-plate-shaped foam in layers and forming a plurality of sole-shaped openings.

### Advantageous Effects

As described above, the present disclosure can recycle a large amount of insole scrap stack produced during a shoe manufacturing process to be used for manufacturing foam for a shoe, by cool-pulverizing or freeze-pulverizing the insole scrap stack to have the average diameter of 0.05 to 0.7mm.

Moreover, the present disclosure can reduce the amount of foamable resins required by a shoe manufacturing plant, by manufacturing foam for a shoe using a pulverized insole scrap that is cool-pulverized or freeze-pulverized to be used for manufacturing foam for a shoe.

Thereby, the present disclosure can solve the problem of environmental destruction due to an insole scrap stack, and contribute to environmental protection by reducing the amount of foamable resins used.

### Description of Drawings

FIG. 1 is a perspective view of a plate-shaped stack in accordance with an embodiment of the present disclosure.
FIG. 2 is a diagram illustrating a state in which the plate-shaped stack of FIG. 1 is separated into an insole stack and an insole scrap stack.
FIG. 3 is an enlarged photograph of a pulverized insole scrap obtained by the present disclosure.
FIG. 4 is an enlarged photograph of foam obtained by Experimental example 1.
FIG. 5 is an enlarged photograph of foam obtained by Experimental example 4.

### Mode for Invention

Hereinafter, embodiments of the present disclosure will be described in detail with reference to the accompanying drawings such that those skilled in the art easily can practice the present disclosure. However, the present disclosure may be implemented in various ways without being limited to particular embodiments described herein. Further, in order to make the present disclosure clear, parts that are not related to the present disclosure will be omitted in the drawings. Like reference numerals denote like components throughout the specification.

It will be understood that the term "comprise" when used in this specification, specifies the presence of stated components but does not preclude the presence or addition of other components, unless otherwise defined.

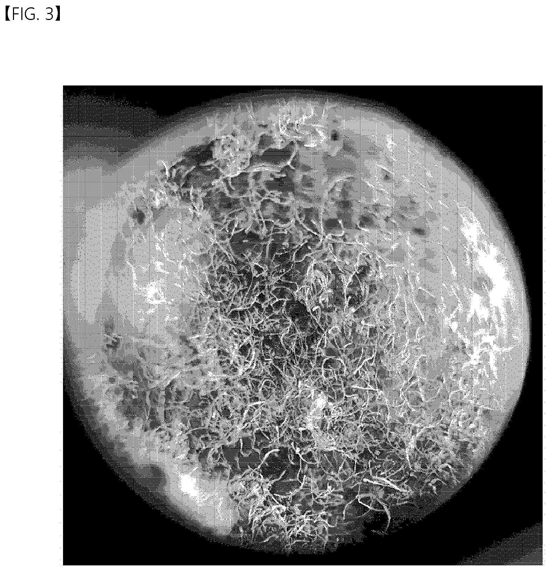

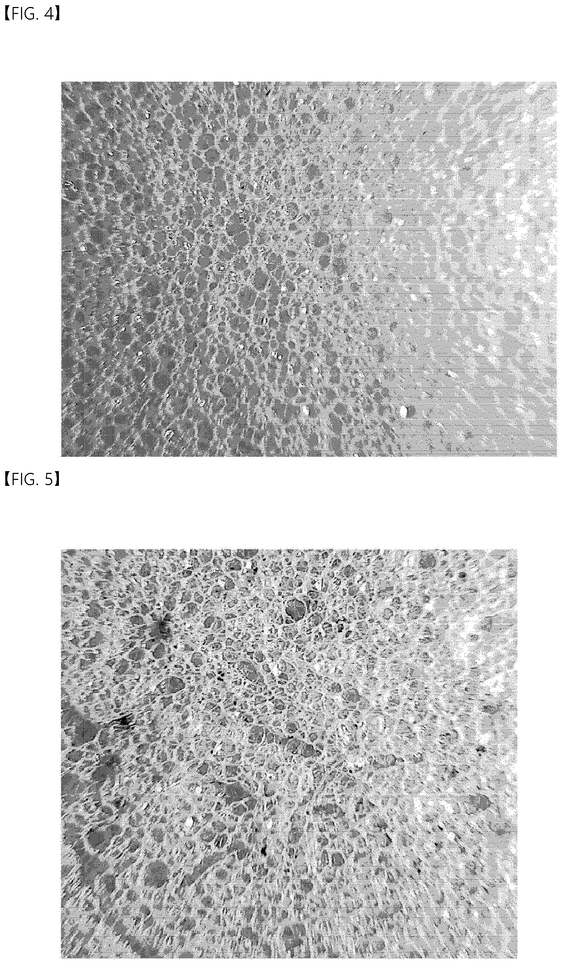

FIG. 1 is a perspective view of a plate-shaped stack in accordance with an embodiment of the present disclosure, FIG. 2 is a diagram illustrating a state in which the plate-shaped stack of FIG. 1 is separated into an insole stack and an insole scrap stack, FIG. 3 is an enlarged photograph of a pulverized insole scrap obtained by the present disclosure, FIG. 4 is an enlarged photograph of foam obtained by Experimental example 1, and FIG. 5 is an enlarged photograph of foam obtained by Experimental example 4.

Each step of the present disclosure will be described in detail.

### (1) Step of forming plate-shaped stack

As shown in FIG. 1, a woven fabric 20 is disposed in layers on an upper surface of a flat-plate-shaped foam 10, thus forming a plate-shaped stack 100. The woven fabric 20 is integrated with the flat-plate-shaped foam 10 via an adhesive or an adhesive film.

The flat-plate-shaped foam 10 is made by foam molding various materials such as polyurethane (PU) or ethylene-vinyl acetate (EVA), and is used as foam for the insole. To this end, a wide variety of technologies have been known.

### (2) Step of separating insole scrap stack

As shown in FIG. 2, the plate-shaped stack 100 of FG. 1 is separated into a plurality of (four in this embodiment) sole-shaped insole stacks 110, and an insole scrap stack 120 obtained by removing the insole stacks 110.

In this embodiment, four insole stacks 110 are separated from one plate-shaped stack 100, but the number of the insole stacks may be changed in various ways.

The insole stack 110 is a part that will become an insole product, but is not the subject of the present disclosure.

A sole-shaped opening 121A is formed in the insole scrap stack 120 by removing the insole stack 110. In this embodiment, four openings 121 are formed.

In the related art, the insole scrap stack 120 is discarded. However, in the present disclosure, the insole scrap stack 120 is recycled.

Since the step of forming the plate-shaped stack and the step of separating the insole scrap stack are substantially equal to those of the related art, a detailed description thereof will be omitted herein.

### (3) Formation of pulverized insole scrap

The insole scrap stack 120 is subjected to cool-pulverizing or freeze-pulverizing at 10°C or less, thus obtaining the pulverized insole scrap having the average diameter of 0.05 to 0.7mm.

If the insole scrap stack 120 is subjected to simple pulverizing at room temperature, a pulverized insole scrap may form fluff in the woven fabric due to pulverizing heat generated during the simple pulverizing. When the foam is made of the pulverized insole scrap that has a non-uniform state while the fluff is formed, a defective quality such as a large amount of air bubbles may occur.

According to the present disclosure, in order to obtain the pulverized insole scrap having an overall uniform state without forming the fluff in the woven fabric, the insole scrap stack 120 is subjected to cool-pulverizing or freeze-pulverizing at 10°C or less.

The term "cool-pulverizing" refers to an operation of pulverizing the insole scrap stack 120 while cooling it at the temperature of 10°C or less using a chiller. Even if the pulverizing heat is generated when the insole scrap stack 120 is pulverized, this is absorbed by the chiller, thus preventing fluff from being formed in the woven fabric due to the pulverizing heat.

The term "freeze-pulverizing" generally refers to an operation of cooling waste resources, such as waste tires, waste rubber, or waste plastic, using a cooling source such as liquid nitrogen or liquefied natural gas at a very low temperature for pulverizing, and then pulverizing the waste resources into fine powder using a pulverizer.

The freeze-pulverizing method is used in other technical fields. However, the freeze-pulverizing method is merely applied to other technical fields because it is difficult to perform a pulverizing operation at room temperature.

The present disclosure adopts the cool-pulverizing method or the freeze-pulverizing method so as to obtain homogeneous pulverized matter without forming the fluff in the woven fabric of the pulverized insole scrap.

Meanwhile, when the average diameter of the pulverized insole scrap is less than 0.05mm, energy required for pulverizing is excessively increased.

Furthermore, when the average diameter of the pulverized insole scrap is more than 0.7mm, a large amount of air bubbles is formed in the foam made of the pulverized insole scrap, thus causing a defective quality.

### (4) Step of preparing foaming mixture

A foaming mixture is prepared by mixing foamable resins, foaming additives, and the pulverized insole scrap.

It is preferable that 100 parts by weight of the foamable resins be mixed with 20 to 60 parts by weight of the the pulverized insole scrap.

When 20 or more parts by weight of the pulverized insole scrap is mixed with 100 parts by weight of the foamable resins, tearing strength may be remarkably increased. When less than 20 parts by weight of the pulverized insole scrap is mixed with 100 parts by weight of the the foamable resins, there is little change in tearing strength.

When more than 60 parts by weight of the pulverized insole scrap is mixed with 100 parts by weight of the foamable resins, it is difficult to perform a dispersing operation and a molding operation and consequently it is impossible to substantially obtain the foam.

The type and amount of the foamable resins and the foaming additives may be applied in various ways.

### (5) Step of forming foam product

The foaming mixture prepared in the foaming mixture preparing step is foamed, thus obtaining a foam product.

The foam product may have the shape of a flat plate, and may be foam for a shoe, particularly foam for an insole.

In the case of obtaining the foam for the shoe by the present disclosure, the insole scrap stack is pulverized in a shoe manufacturing plant to be recycled in an insole manufacturing process, and the insole scrap stack produced in the process of manufacturing the insole using the foam for the insole may be recycled again in the insole manufacturing process.

The foam product may not only be used as foam for a shoe, such as foam for an insole, foam for a midsole, foam for an outsole, but also may be used as foam for various purposes, such as industrial and architectural use.

### < Experimental example >

### Experimental example 1:

6700g of Ethylene Vinyl Acetate (EVA) resin and 2000g of polyethylene (PE) resin as foamable resins, 600g of cross-linking promoter, 600g of foaming agent, and 100g of cross-linking agent as foaming additives are mixed to form a foaming mixture.

Thereafter, the foaming mixture is mixed in a kneader, and the mixture passing through the kneader is dispersed and transformed into a sheet by a roll process and is cut to a proper size. Subsequently, a material in the shape of the cut sheet is put into a press, and heat is applied for a predetermined time to foam and thereby attain a foam product.

### Experimental examples 2 to 5:

In a plate-shaped stack obtained by arranging foam manufactured by Experimental example 1 and woven fabric in layers, four sole-shaped openings are formed and the insole scrap stack is obtained. This is subjected to cool-pulverizing or freeze-pulverizing to have the average diameter of 0.5mm, so that the pulverized insole scrap is obtained. FIG. 3 is an enlarged photograph of the pulverized insole scrap.

Subsequently, the pulverized insole scrap, Ethylene Vinyl Acetate (EVA) resin and polyethylene (PE) resin as the foamable resins, the cross-linking promoter, the foaming agent, and the cross-linking agent as the foaming additives are mixed as in the following Table 1 to form the foaming mixture, and then the corresponding foaming mixture is mixed, dispersed, and foamed, so that the foam product is obtained.

**[Table 1]**

| Type (unit: g) | | Experime -ntal example 1 | Experime -ntal example 2 | Experime -ntal example 3 | Experime -ntal example 4 | Experime -ntal example 5 |
|---|---|---|---|---|---|---|
| foamable resins | EVA resin | 6700 | 6400 | 6200 | 5500 | 4700 |
| | PE resin | 2000 | 1800 | 1500 | 1200 | 1000 |
| | Total | 8700 | 8200 | 7700 | 6700 | 5700 |
| Pulverized insole scrap (diameter 0.5mm) | | - | 410 (8200 x 5/100) | 1540 (7700 x 20/100) | 2680 (6700 x 40/100) | 3420 (5700 x 60/100) |
| Cross-linking promoter | | 600 | 600 | 600 | 600 | 600 |
| Foaming agent | | 600 | 600 | 600 | 600 | 600 |
| Cross-linking agent | | 100 | 100 | 100 | 100 | 100 |
| Total | | 10000 | 9910 | 10540 | 10680 | 10420 |

In other words, Experimental examples 2 to 5 show that 100 parts by weight of the foamable resins is mixed with 5 parts by weight, 20 parts by weight, 40 parts by weight, and 60 parts by weight of the pulverized insole scrap, respectively. When 100 parts by weight of the foamable resins is mixed with more than 60 parts by weight of the pulverized insole scrap, it is difficult to perform the dispersing operation and the molding operation and thereby it is impossible to obtain foam. Thus, experimental results therefor were excluded.

The hardness, the tensile strength, the elongation, and the tearing strength for foam manufactured by each of Experimental examples 1 to 5 were tested and their results are shown in the following Table 2.

**[Table 2]**

| Type | Experime -ntal example 1 | Experimen -tal example 2 | Experimen -tal example 3 | Experimen -tal example 4 | Experimen -tal example 5 |
|---|---|---|---|---|---|
| Hardness (Asker C) | 29 | 29 | 30 | 31 | 31 |
| Tensile Strength (kg/cm2) | 15 | 16 | 16 | 16 | 16 |
| Elongation (%) | 250 | 250 | 250 | 250 | 250 |
| Tear Strength (kg/cm) | 4.8 | 6.2 | 6.7 | 6.8 | 6.7 |

As seen in Table 2, it can be seen that the tear strength of Experimental examples 3 to 5 according to the present disclosure is remarkably improved as compared with that of Experimental example 1. It is to be understood that, when 100 parts by weight of the foamable resins is mixed with 20 or more parts by weight of the pulverized insole scrap, the tear strength of the foam is improved due to fibers forming the woven fabric.

FIG. 4 is an enlarged photograph of foam according to Experimental example 1, and FIG. 5 is an enlarged photograph of foam according to Experimental example 4.

While the present disclosure has been particularly described with reference to exemplary embodiments shown in the drawings, it will be understood by those of ordinary skill in the art that the exemplary embodiments have been described for illustrative purposes, and various changes and modifications may be made without departing from the spirit and scope of the present disclosure as defined by the appended claims. Accordingly, embodiments of the present disclosure are intended not to limit the technical idea of the invention but to illustrate the technical idea. For example, each component described as being a single one may be embodied in a distributed manner, and similarly, components described as being distributed may be embodied in a combined form.

It is to be understood that the scope of the present disclosure is defined solely by the following claims and equivalences thereof.

### Industrial Applicability

As described above, the present disclosure may be used to recycle an insole scrap produced as a by-product in a process of manufacturing an insole, and may be used to manufacture foam for a shoe with the insole scrap.

## Claims

1. A method of recycling an insole scrap, the method comprising:
forming a plate-shaped stack by disposing woven fabric on an upper surface of flat-plate-shaped foam in layers;
separating the plate-shaped stack into a sole-shaped insole stack and an insole scrap stack from which the insole stack is removed; and
forming a pulverized insole scrap having an average diameter of 0.05 to 0.7mm by cool-pulverizing or freeze-pulverizing the insole scrap stack at 10°C or less,
wherein the pulverized insole scrap is for manufacturing foam.

2. The method of claim 1, further comprising:
after the forming of the pulverized insole scrap, forming a foaming mixture in which foamable resins, foaming additives, and the pulverized insole scrap are mixed with each other; and
forming a foam product by foaming the foaming mixture.

3. The method of claim 2, wherein, at the forming of the foaming mixture, 20 to 60 parts by weight of the pulverized insole scrap is mixed with 100 parts by weight of the foamable resins.

4. The method of claim 3, wherein the foam product obtained at the forming of the foam product is a foam for a shoe in a form of a flat plate.

5. Foam for a shoe manufactured by a method of recycling an insole scrap of any one of claims 2 to 4.

6. A pulverized insole scrap for manufacturing foam, wherein the pulverized insole scrap has an average diameter of 0.05 to 0.7mm by cool-pulverizing or freeze-pulverizing an insole scrap stack at 10°C or less, the insole scrap stack being obtained by disposing woven fabric on an upper surface of flat-plate-shaped foam in layers and forming a plurality of sole-shaped openings.
